# EUROPEAN PATENT APPLICATION

(11) **EP 1 479 421 A1**
(43) Date of publication of application: **24.11.2004**
(21) Application number: 04251842.3
(22) Date of filing: 29.03.2004
(51) Int. Cl.: A63F 13/10

(54) **System for displaying game information**

(30) Priority: 29.04.2003 US 466677 P; 05.06.2003 US 456415
(71) Applicant: Sony Computer Entertainment America Inc., Foster City, CA 94404-2175 (US)
(72) Inventor: Campbell, Scott, Sony Computer Enter. America Inc., Foster City, CA 94404-2175 (US)
(74) Representative: Turner, James Arthur

(57) **Abstract**

A system for displaying game information is described. In one embodiment a processor is configured to receive game information and to display the game information within a dividing bar that divides a game screen. The embodiment also includes game software and a dividing bar module stored in a memory. The dividing bar module is configured to retrieve the game information from the game software and to transmit the game information to the processor for displaying.

## Description

This invention relates to a system for displaying game information.

Multiplayer video games oftentimes have split-screen functionality that enables two or more players to play the games simultaneously. Typically, a dividing bar divides the video game screen into multiple sections or windows. Each section or window acts as an individual game screen for a particular player, thereby allowing each player to view the game environment and play the video game at the same time as the other players.

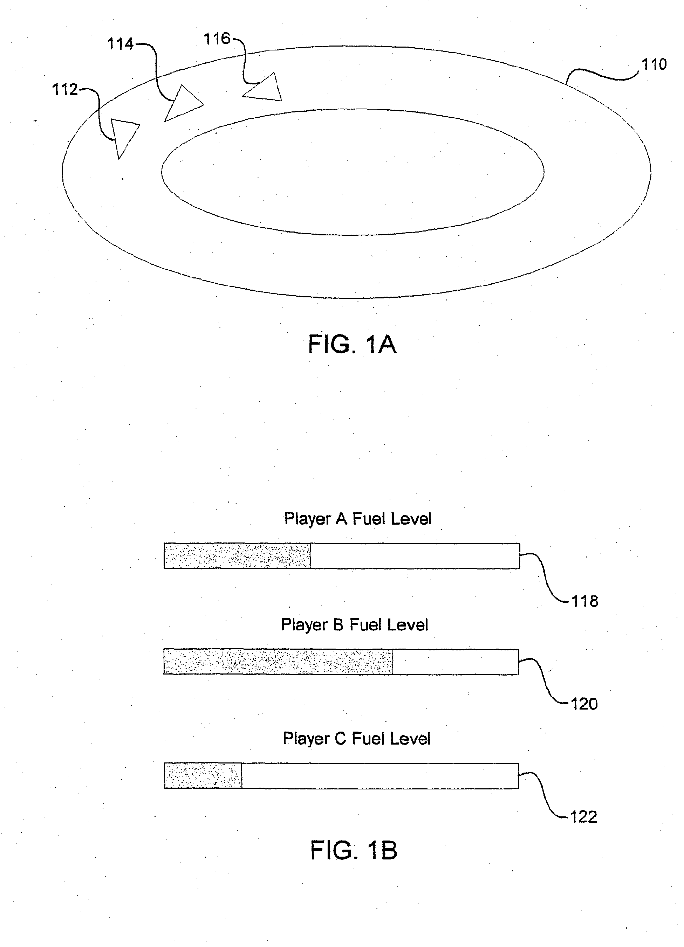

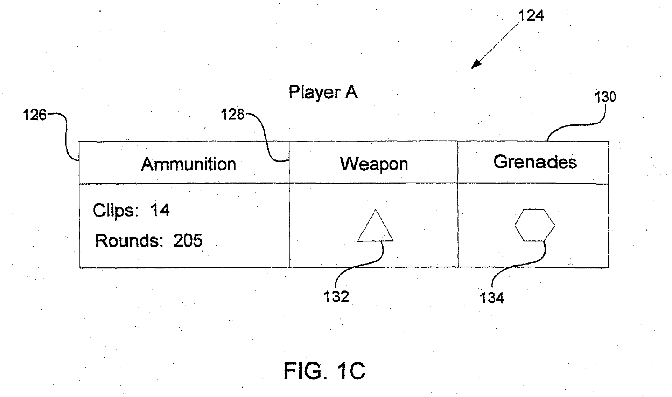

Another feature of multiplayer video games, as well as other types of video games, is that the games usually display video game information on the game screen during game play. These game displays typically consist of information most relevant to the game. For example, FIG. 1A of the accompanying drawings is a diagram illustrating video game information displayed on a game screen, according to a previously proposed embodiment. As shown, the game information consists of a race course 110 and race car icons 112, 114 and 116. Each icon represents the race car of one of the players, and, during game play, the game display depicts the relative position of each player's race car on race course 110. This type of game information may appear on the game screens of multiplayer racing games such as car racing games, motorcycle racing games and snowboarding racing games, to name a few.

FIG. 1B of the accompanying drawings is a diagram illustrating video game information displayed on a game screen, according to another previously proposed embodiment. As shown, the game information consists of a player A fuel level 118, a player B fuel level 120 and a player C fuel level 122. Each fuel level indicates the amount of gasoline or other fuel remaining in a player's vehicle. For example, in a car racing game, player A fuel level 118 indicates that a bit less than half of a tank of fuel remains in player A's race car. This type of game information may appear on the game screens of multiplayer racing games that involve mechanized vehicles such as car racing or motorcycle racing games. Also, similarly depicted information representing "power" levels or "energy" levels may appear in multiplayer role playing or fantasy games. In such games, a given "power" or "energy" level represents the amount of power or energy that a particular player's character has left, where that player's character normally "dies" when the power or energy level reaches zero.

FIG. 1C of the accompanying drawings is a diagram illustrating video game information displayed on a game screen, according to another previously proposed embodiment. As shown, the game information consists of munitions 124 of player A. Munitions 124 are subdivided into three categories - an ammunition category 126, a weapon category 128 and a grenades category 130. Ammunition category 126 sets forth how many clips of ammunition remain at player A's disposal as well as the total number of rounds remaining in those clips. Weapon category 128 includes a weapon icon 132, which indicates the type of weapon that player A currently is using in the game. Typically, a different weapon icon represents each weapon available to players within a particular game. Grenades category 130 includes a grenades icon 134, which indicates the type of grenades that player A currently is using in the game. Typically, a different grenades icon typically represents each type of grenade available to players within a particular game.

A significant drawback of conventional multiplayer games is that some games superimpose game information on top of the game environment. The consequence is that the game information obstructs a player's view of the game environment during play. Although the game information usually is located in an upper or lower corner of the game screen, the displayed game information nonetheless interferes with the player's ability to view the entire game environment during game play.

Various respective aspects and features of the invention are defined in the appended claims. Features from the dependent claims may be combined with features of the independent claims as appropriate and not merely as explicitly set out in the claims.

Included in the disclosure is one embodiment of a system for displaying game information. The embodiment of the system has a processor configured to receive game information and to display the game information within a dividing bar. The embodiment also has game software and a dividing bar module stored in a memory. The dividing bar module is configured to retrieve the game information from the game software and to transmit the game information to the processor for displaying.

Another embodiment of the system has two memories, with the game software stored in one memory and the dividing bar module stored in the other memory.

In various embodiments, the type of game information displayed within the dividing bar includes, but is not limited to, a relative position of a player, an amount of fuel remaining, an amount of power remaining, an amount of energy remaining, a type of weapon being used, an amount of ammunition remaining and a type of grenade being used.

The invention will now be described by way of example with reference to the accompanying drawings, throughout which like parts are referred to by like references, and in which:
FIG. 1A is a diagram illustrating video game information displayed on a game screen, according to a previously proposed embodiment;
FIG. 1B is a diagram illustrating video game information displayed on a game screen, according to another previously proposed embodiment;
FIG. 1C is a diagram illustrating video game information displayed on a game screen, according to another previously proposed embodiment;
FIG. 2 is a block diagram of an electronic entertainment system, according to an embodiment of the invention;
FIG. 3 is a diagram of a game screen, including a dividing bar, according to an embodiment of the invention;
FIG. 4 is a diagram of the main memory of FIG. 2, according to an embodiment of the invention;
FIG. 5A is a diagram of video game information displayed within the dividing bar of FIG. 3, according to an embodiment of the invention;
FIG. 5B is a diagram of video game information displayed within the dividing bar of FIG. 3, according to an embodiment of the invention; and
FIG. 5C is a diagram of video game information displayed within the dividing bar of FIG. 3, according to an embodiment of the invention;

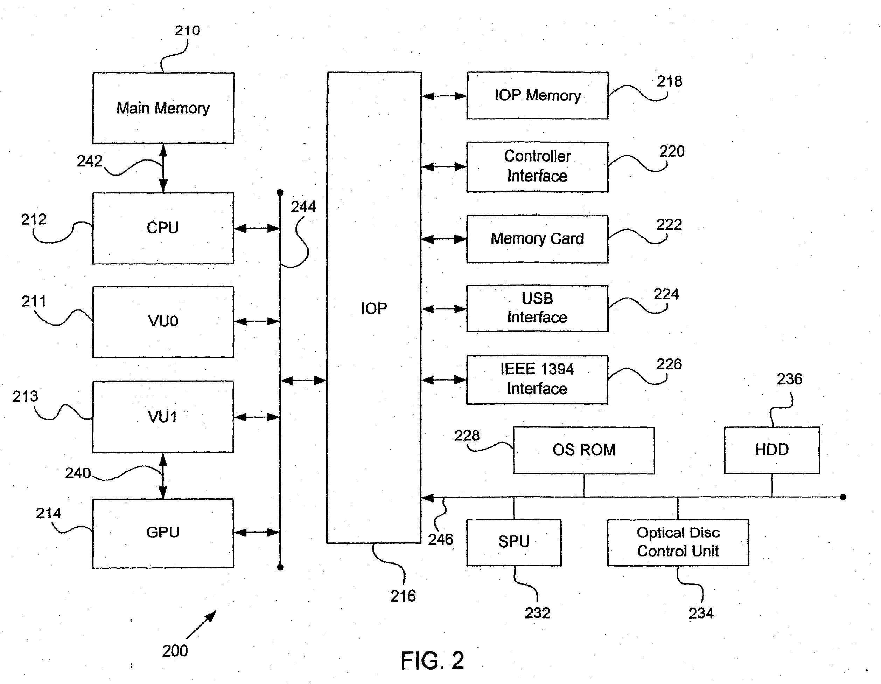

FIG. 2 is a block diagram of an electronic entertainment system 200, according to one embodiment of the invention. System 200 includes, but is not limited to, a main memory 210, a central processing unit (CPU) 212, vector processing units VU0 211 and VU1 213, a graphics processing unit (GPU) 214, an input/output processor (IOP) 216, an IOP memory 218, a controller interface 220, a memory card 222, a Universal Serial Bus (USB) interface 224, and an IEEE 1394 interface 226. System 200 also includes an operating system read-only memory (OS ROM) 228, a sound processing unit (SPU) 232, an optical disc control unit 234, and a hard disc drive (HDD) 236, which are connected via a bus 246 to IOP 216. System 200 is preferably an electronic gaming console; however, system 200 may also be implemented as a general-purpose computer, a set-top box, or a hand-held gaming device.

CPU 212, VU0 211, VU1 213, GPU 214, and IOP 216 communicate via a system bus 244. CPU 212 communicates with main memory 210 via a dedicated bus 242. VU1 213 and GPU 214 may also communicate via a dedicated bus 240. CPU 212 executes programs stored in OS ROM 228 and main memory 210. Main memory 210 may contain prestored programs and may also contain programs transferred via IOP 216 from a CD-ROM, DVD-ROM, or other optical disc (not shown) using optical disc control unit 234. Main memory 210 may also contain programs transferred from a remote server (not shown) over a network (not shown). IOP 216 controls data exchanges between CPU 212, VU0 211, VU1 213, GPU 214 and other devices of system 200, such as controller interface 220.

GPU 214 executes drawing instructions from CPU 212 and VU0 211 to produce images for display on a display device (not shown). VU1 213 transforms objects from three-dimensional coordinates to two-dimensional coordinates, and sends the two-dimensional coordinates to GPU 214. SPU 232 executes instructions to produce sound signals that are output on an audio device (not shown).

A user of system 200 provides instructions via controller interface 220 to CPU 212. For example, the user may instruct CPU 212 to store certain game information on memory card 222 or may instruct a character in a game to perform some specified action. Other devices may be connected to system 200 via USB interface 224 and IEEE 1394 interface 226.

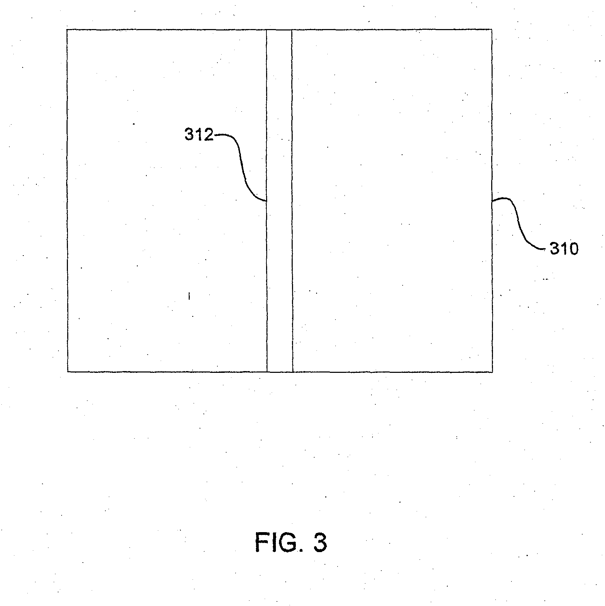

FIG. 3 is a diagram of a game screen 310, including a dividing bar 312, according to one embodiment of the invention. As shown, dividing bar 312 divides game screen 310 into two sections. This configuration allows two players to play a multiperson game simultaneously. One player views the game environment and plays the game on the left side of game screen 310, and the second player views the game environment and plays the game on the right side of game screen 310. In this embodiment, dividing bar 312 is oriented vertically with respect to game screen 310. In other embodiments, dividing bar 312 can have any orientation with respect to game screen 310. For example, dividing bar 312 can be horizontally oriented or diagonally oriented. Further, dividing bar 312 can be any appropriate width. The result is that, in different embodiments, the width of dividing bar 312 can vary depending on the type of game information displayed within dividing bar 312.

The embodiment set forth in FIG. 3 also shows only one dividing bar 312. In other embodiments, more than one dividing bar can divide game screen 310, thereby allowing more than two players to play a multiplayer game simultaneously. For example, two vertically oriented dividing bars can divide game screen 310 into three sections, thereby allowing three players to play the game simultaneously. Similarly, one vertically oriented dividing bar and one horizontally oriented dividing bar can divide game screen 310 into four sections, thereby allowing four players to play the game simultaneously.

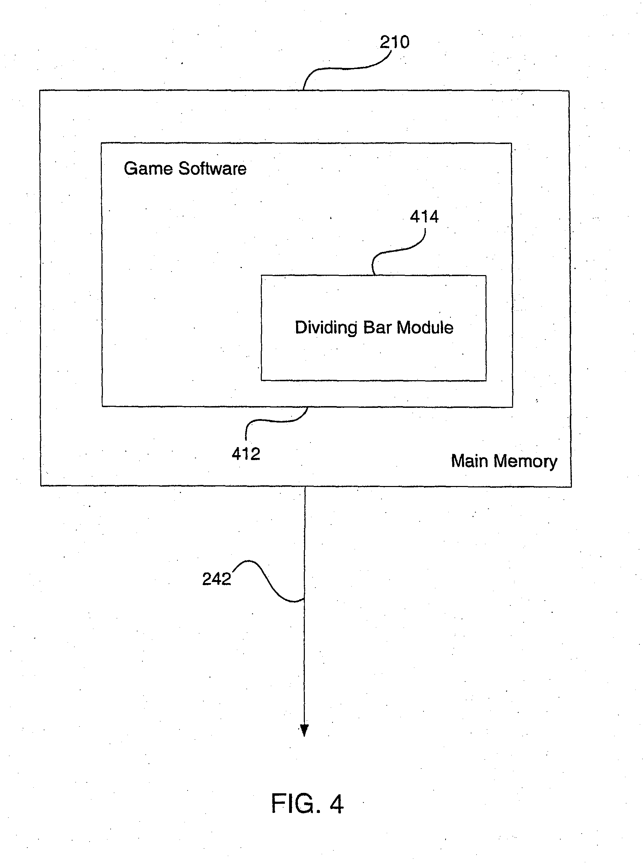

FIG. 4 is a diagram of the main memory 210 of FIG. 2, according to one embodiment of the invention. Main memory 210 includes, but is not limited to, game software 412, which can be loaded into main memory 210 from an optical disc in optical disc control unit 234. Game software 412 includes instructions executable by CPU 212, VU0 211, VU1 213 and SPU 232 that allow a user of system 200 to play a multiplayer game. For example, in the FIG. 4 embodiment, game software 412 can be a car racing game, in which the user steers a race car through a race course selected by the user. In other embodiments, game software 412 can be any other type of multiplayer game, including but not limited to, a role-playing game, a fantasy game, a combat simulation game or any other type of racing game.

As shown, game software 412 includes a dividing bar module 414, which, among other things, is responsible for displaying game information within dividing bar 312. Dividing bar module 414 is configured to communicate with and retrieve game information from game software 412 during game play. Dividing bar module 414 is further configured to transmit this game information to GPU 214 via dedicated bus 242 and CPU 212. GPU 214 executes drawing instructions from CPU 212 to produce images that represent the transmitted game information within dividing bar 312. In other embodiments, dividing bar module 414 can be separate from game software 412. For example, dividing bar module 414 can be a stand-alone program or piece of software that communicates with game software 412. If separate from game software 412, dividing bar module 414 can reside either in main memory 210 or in any other memory within system 200.

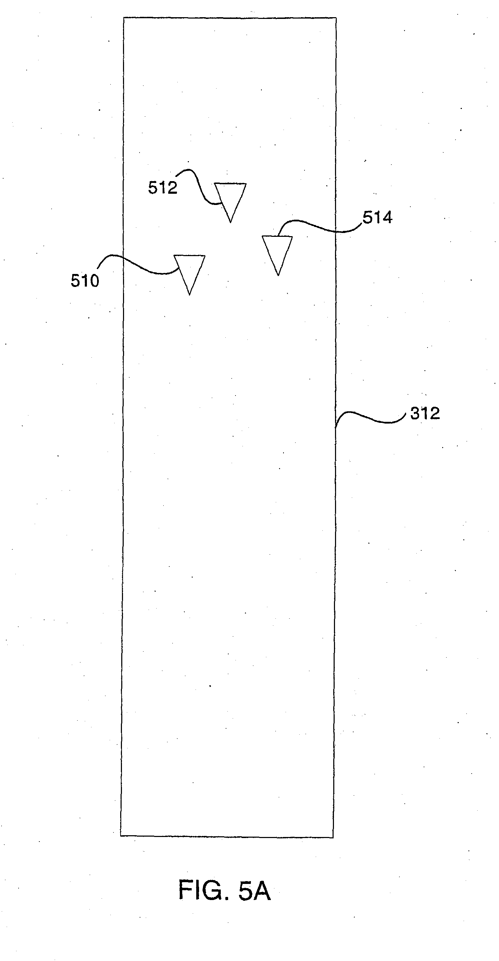

FIG. 5A is a diagram of video game information displayed within dividing bar 312 of FIG. 3, according to one embodiment of the invention. As shown, the game information includes race car icons 510, 512 and 514 displayed to show the relative position of each player of a multiplayer car racing game. Each icon represents the race car of a different player. A given player can be either a user of system 200 (referred to as a "user/player") or a non-playable character (NPC) player (i.e., where game software 412 controls the race car). Also as shown, race car icons 510, 512 and 514 are moving from the top of dividing bar 312 to the bottom. In another embodiment, race car icons 510, 512 and 514 can move from the bottom of dividing bar 312 to the top. In an embodiment where dividing bar 312 is horizontally-oriented, race car icons 510, 512 and 514 can move either from the left side of dividing bar 312 to the right side or from the right side of dividing bar 312 to the left side.

In a scenario where two users of system 200 play the car racing game, each of two icons, such as race car icons 510 and 512, would represent the race car of a different user/ player. The third icon, race car icon 514, would represent the race car of a NPC player. Further, one dividing bar 312 would divide game screen 310 into two sections, thereby allowing one user/ player to play the game on the left side of game screen 310 and the other user/player to play the game on the right side of game screen 310. In a scenario where three users play the car racing game, each of race car icons 510, 512 and 514 would represent the race car of a different user/ player, as no NPC player would play. Further, two dividing bars would divide game screen 310 into three sections, thereby allowing a different user/ player to play the game in each of the sections. In embodiments where multiple dividing bars divide game screen 310, the game information can be displayed within any of the dividing bars. Thus, in the three player scenario, the game information would be displayed in either of the two dividing bars or both. Although only three race car icons 510, 512 and 514 are shown in FIG. 5A, other embodiments may use any number of icons is within the scope of the invention.

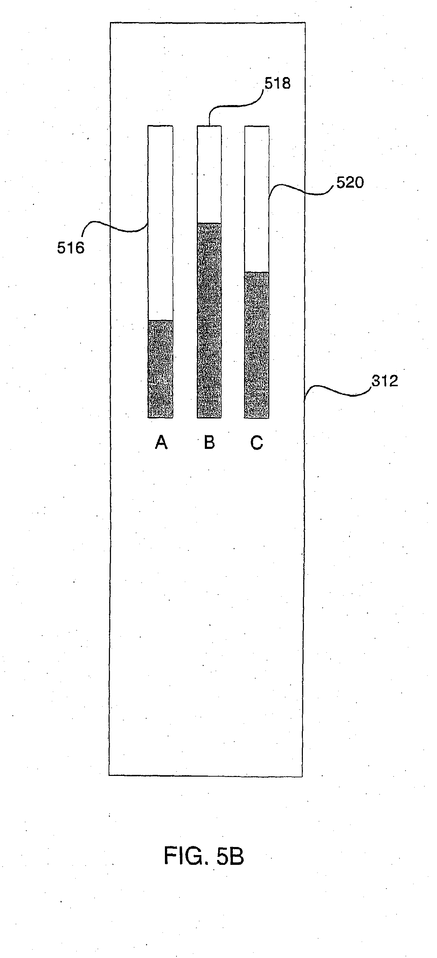

FIG. 5B is a diagram of one embodiment of video game information displayed within dividing bar 312 of FIG. 3, according to one embodiment of the invention. As shown, the game information includes a player A fuel level 516, a player B fuel level 518 and a player C fuel level 520. In a multiplayer car racing game, for example, player A fuel level 516 indicates that approximately a third of a tank of fuel remains in player A's race car, whereas player B fuel level 518 indicates that more than half of a tank of fuel remains in player B's race car.

Again, in a scenario where two users of system 200 play the car racing game, each of two fuel levels, such as player B fuel level 518 and player C fuel level 520, would indicate the amount of fuel remaining in the race car of a different user/player. The third fuel level, player A fuel level 516, would indicate the amount of fuel remaining in the race car of a NPC player. Further, one dividing bar 312 would divide game screen 310 into two sections, thereby allowing one user/player to play the game on the left side of game screen 310 and the other user/player to play the game on the right side of game screen 310. In a scenario where three users play the car racing game, each of player A fuel level 516, player B fuel level 518 and player C fuel level 520 would indicate the amount of fuel remaining in the race car of a different user/ player, as no NPC player would play. Further, two dividing bars would divide game screen 310 into three sections, thereby allowing a different user/player to play the game in each of the sections. Again, in the three player scenario, the game information would be displayed in either of the two dividing bars or both.

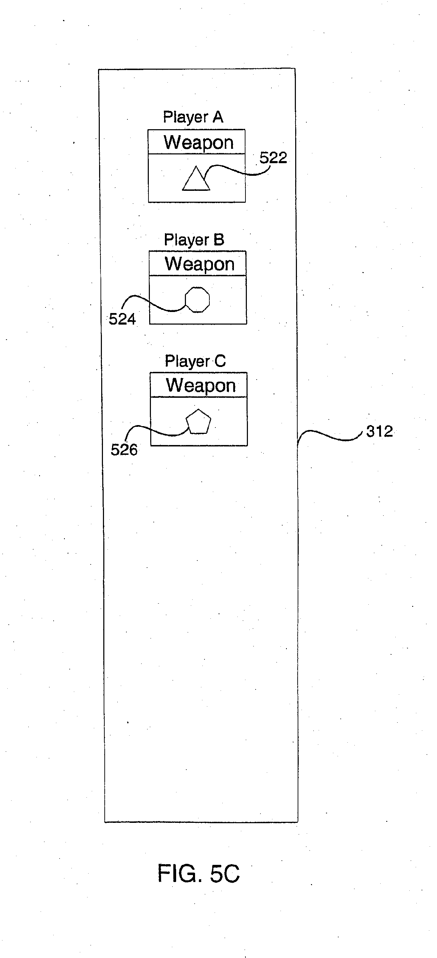

FIG. 5C is a diagram of video game information displayed within dividing bar 312 of FIG. 3, according to one embodiment of the invention. As shown, the game information includes weapon icons 522, 524 and 526 displayed to indicate the weapon that each player of a multiplayer combat simulation game is using. Here, the game information communicates to the players that each player currently is using a different weapon as seen by the fact that weapon icons 522, 524 and 526 are all different from one another.

Again, in a scenario where two users of system 200 play the combat simulation game, each of two icons, such as weapon icons 522 and 524, would indicate the current weapon of a different user/ player. The third icon, weapon icon 526, would indicate the current weapon of a NPC player. Further, one dividing bar 312 would divide game screen 310 into two sections, thereby allowing one user/player to play the game on the left side of game screen 310 and the other user/player to play the game on the right side of game screen 310. In a scenario where three users play the combat simulation game, each of weapon icons 522, 524 and 526 would indicate the current weapon of a different user/player, as no NPC player would play. Further, two dividing bars would divide game screen 310 into three sections, thereby allowing a different user/player to play the game in each of the sections. Again, in the three player scenario, the game information would be displayed in either of the two dividing bars or both.

In other embodiments of the invention, the game information displayed within dividing bar 312 can change during game play. For example, in a combat simulation game, the game information displayed can change from the current weapon that each player is using, as shown in FIG. 5C, to the amount of ammunition that each player has or to the type of grenades that each player is using. Similarly, in a role playing or fantasy game, the game information displayed can change from the "power" or "energy" that each player has remaining to the type of weapon that each player is using or to the types of spells or potions at each player's disposal. In one embodiment, game software 412 is configured to change automatically the game information displayed. For example, game software 412 can be configured to change the displayed game information every two minutes. In another embodiment, an individual user/ player has the ability to change the displayed game information. For example, the user/ player can use hand-held controls to command game software 412 to change the type of game information displayed.

One advantage of the system described above is that the system displays game information within the dividing bar of a multiplayer game instead of superimposing the game information on top of the game environment. The system therefore does not display game information in a way that obstructs a player's view of the game environment during game play.

The invention has been described above with reference to specific embodiments. Persons skilled in the art, however, will understand that various modifications and changes may be made thereto without departing from the broader scope of the invention as set forth in the appended claims. For example, although FIGS. 5A-5C illustrate scenarios involving only two or three players, any configuration of game screen 310 in which game information is displayed within at least one dividing bar falls within the scope of the invention, regardless of the number of players. In addition, although FIGS. 5A-5C illustrate situations involving car racing game information and combat simulation game information, the display of any type of game information within at least one dividing bar falls within the scope of the invention. The foregoing description and drawings are, accordingly, to be regarded in an illustrative rather than a restrictive sense.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for displaying game information, comprising:
a processor configured to receive game information and to display the game information within a dividing bar;
game software stored in a memory; and
a dividing bar module stored in the memory, the dividing bar module configured to retrieve the game information from the game software and to transmit the game information to the processor for displaying.

2. The system of claim 1, wherein the dividing bar is a component of a game screen displayed on a display device.

3. The system of claim 1, wherein the game information comprises a relative position of a player.

4. The system of claim 1, wherein the game information comprises an amount of fuel remaining.

5. The system of claim 1, wherein the game information comprises an amount of power remaining.

6. The system of claim 1, wherein the game information comprises an amount of energy remaining.

7. The system of claim 1, wherein the game information comprises a type of weapon being used.

8. The system of claim 1, wherein the game information comprises an amount of ammunition remaining.

9. The system of claim 1, wherein the game information comprises a type of grenade being used.

10. The system of claim 1, wherein the game software automatically changes the game information displayed.

11. The system of claim 1, wherein a player has the ability to change the game information displayed.

12. A system for displaying game information, comprising:
a processor configured to receive game information and to display the game information within a dividing bar;
game software stored in a memory; and
a dividing bar module stored in another memory, the dividing bar module configured to retrieve the game information from the game software and to transmit the game information to the processor for displaying.

13. The system of claim 12, wherein the dividing bar is a component of a game screen displayed on a display device.

14. The system of claim 12, wherein the game information comprises a relative position of a player.

15. The system of claim 12, wherein the game information comprises an amount of fuel remaining.

16. The system of claim 12, wherein the game information comprises an amount of power remaining.

17. The system of claim 12, wherein the game information comprises an amount of energy remaining.

18. The system of claim 12, wherein the game information comprises a type of weapon being used.

19. The system of claim 12, wherein the game information comprises an amount of ammunition remaining.

20. The system of claim 12, wherein the game information comprises a type of grenade being used.

21. The system of claim 12, wherein the game software automatically changes the game information displayed.

22. The system of claim 12, wherein a player has the ability to change the game information displayed.

23. A system for displaying game information, comprising:
means for retrieving game information from game software; and
means for displaying the game information within a dividing bar.

24. The system of claim 23, wherein the means for displaying comprises means for transmitting the game information to a processor configured to receive the game information and to display the game information within the dividing bar.

25. The system of claim 23, further comprising means for automatically changing the game information displayed.

26. The system of claim 23, further comprising means for a player to change the game information displayed.

27. A computer-readable medium storing instructions for causing a computer to display game information by performing the steps of:
retrieving game information from game software; and
displaying the game information within a dividing bar.

28. The computer-readable medium of claim 27, wherein the step of displaying comprises transmitting the game information to a processor configured to receive the game information and displaying the game information within the dividing bar.

29. The computer-readable medium of claim 27, wherein the game information comprises a relative position of a player.

30. The computer-readable medium of claim 27, wherein the game information comprises an amount of fuel remaining.

31. The computer-readable medium of claim 27, wherein the game information comprises an amount of power remaining.

32. The computer-readable medium of claim 27, wherein the game information comprises an amount of energy remaining.

33. The computer-readable medium of claim 27, wherein the game information comprises a type of weapon being used.

34. The computer-readable medium of claim 27, wherein the game information comprises an amount of ammunition remaining.

35. The computer-readable medium of claim 27, wherein the game information comprises a type of grenade being used.

36. The computer-readable medium of claim 27, further comprising the step of automatically changing the game information displayed.

37. The computer-readable medium of claim 27, further comprising the step of providing a player with the ability to change the game information displayed.

38. A method for displaying game information, comprising:
retrieving game information from game software; and
displaying the game information embedded in a dividing bar shown on a game screen.

39. The method of claim 38, wherein the game information comprises a relative position of a player.

40. The method of claim 38, wherein the game information comprises an amount of fuel remaining.

41. The method of claim 38, wherein the game information comprises an amount of power remaining.

42. The method of claim 38, wherein the game information comprises an amount of energy remaining.

43. The method of claim 38, wherein the game information comprises a type of weapon being used.

44. The method of claim 38, wherein the game information comprises an amount of ammunition remaining.

45. The method of claim 38, wherein the game information comprises a type of grenade being used.

46. The method of claim 38, further comprising the step of automatically changing the game information displayed.

47. The method of claim 38, further comprising the step of providing a player with the ability to change the game information displayed.
